# EUROPEAN PATENT APPLICATION

(11) **EP 4 818 992 A1**
(43) Date of publication of application: **07.10.2026**
(21) Application number: 23960208.9
(22) Date of filing: 30.11.2023
(51) Int. Cl.: G06N 20/00

(54) **INFORMATION PROCESSING DEVICE, INFORMATION PROCESSING METHOD, AND INFORMATION PROCESSING PROGRAM**

(71) Applicant: Pioneer Corporation, Tokyo 113-0021 (JP)
(72) Inventor: OWADA, Hideaki, Tokyo 170-0013 (JP)
(74) Representative: Hoffmann Eitle
(86) International application number: PCT/JP2023/042971
(87) International publication number: WO 2025/115191

(57) **Abstract**

An information processing device according to the present invention includes a determination unit, an adjustment unit, and a notification unit. The determination unit acquires response information generated by a chatbot in accordance with input information, and determines response accuracy of the chatbot on the basis of whether the acquired response information satisfies a predetermined condition. In a case where it is determined that the response information does not satisfy the predetermined condition and the response accuracy of the chatbot is low, the adjustment unit executes predetermined processing of automatically improving the response accuracy. In a case where the response information acquired by the determination unit does not satisfy the predetermined condition after the execution of the predetermined processing, the notification unit notifies a predetermined notification destination that the response accuracy cannot be automatically improved.

## Description

### Field

The present invention relates to an information processing device, an information processing method, and an information processing program.

### Background

In recent years, various voice assist functions by a chatbot on which a large language model is mounted have been proposed.

Incidentally, Patent Literature 1 discloses a technique of requesting a user to provide feedback with respect to one or a plurality of contents parameters of a proposal or other contents given by a chatbot.

### Citation List

### Patent Literature

Patent Literature 1: JP 2019-537802 A

### Summary

### Technical Problem

However, the above-described conventional technique is a technique that focuses on contents of proposal, such as improvement in future proposal and other contents given to a user, and does not consider improvement in response accuracy of a chatbot.

Thus, in the above-described conventional technique, it is not always possible to cause the user to grasp that manpower is necessary to improve the response accuracy of the chatbot.

The present invention has been made in view of the above, and proposes an information processing device, an information processing method, and an information processing program capable of causing a user to grasp that manpower is necessary to improve response accuracy of a chatbot.

### Solution to Problem

An information processing device comprising: a determination unit that acquires response information generated by a chatbot in accordance with input information, and determines response accuracy of the chatbot on a basis of whether the acquired response information satisfies a predetermined condition; an adjustment unit that executes, in a case where it is determined that the response information does not satisfy the predetermined condition and the response accuracy of the chatbot is low, predetermined processing of automatically improving the response accuracy; and a notification unit that notifies a predetermined notification destination that the response accuracy cannot be automatically improved in a case where the response information acquired by the determination unit does not satisfy the predetermined condition after the adjustment unit executes the predetermined processing.

An information processing method executed by an information processing device, the information processing method comprising: a determination step of acquiring response information generated by a chatbot in accordance with input information, and determining response accuracy of the chatbot on a basis of whether the acquired response information satisfies a predetermined condition; an adjustment step of executing predetermined processing of automatically improving the response accuracy in a case where it is determined that the response information does not satisfy the predetermined condition and the response accuracy of the chatbot is low; and a notification step of notifying a predetermined notification destination that the response accuracy cannot be automatically improved in a case where the response information acquired in the determination step does not satisfy the predetermined condition after the predetermined processing is executed in the adjustment step.

An information processing program executed by an information processing device, the information processing program causing the information processing device to execute: a determination procedure of acquiring response information generated by a chatbot in accordance with input information and determining response accuracy of the chatbot on a basis of whether the acquired response information satisfies a predetermined condition; an adjustment procedure of executing predetermined processing of automatically improving the response accuracy in a case where it is determined that the response information does not satisfy the predetermined condition and the response accuracy of the chatbot is low; and a notification procedure of notifying a predetermined notification destination that the response accuracy cannot be automatically improved in a case where the response information acquired in the determination procedure does not satisfy the predetermined condition after the predetermined processing is executed in the adjustment procedure.

### Brief Description of Drawings

FIG. 1 is a diagram illustrating an example of a system according to an embodiment.
FIG. 2 is a diagram illustrating a device configuration example according to a first embodiment.
FIG. 3 is a diagram illustrating an overall flow of an information processing procedure according to the first embodiment which procedure is realized by an adjustment device.
FIG. 4 is a diagram illustrating a specific procedure (1) of evaluation processing according to the embodiment.
FIG. 5 is a diagram illustrating a specific procedure (2) of the evaluation processing according to the embodiment.
FIG. 6 is a diagram illustrating a specific procedure (1) of adjustment processing according to the first embodiment.
FIG. 7 is a diagram illustrating a specific procedure (2) of the adjustment processing according to the embodiment.
FIG. 8 is a diagram illustrating a procedure of interaction control executed by the adjustment device according to the first embodiment.
FIG. 9 is a diagram illustrating a device configuration example according to a second embodiment.
FIG. 10 is a diagram illustrating an overall flow of an information processing procedure according to the second embodiment which procedure is realized by an adjustment device.
FIG. 11 is a diagram illustrating a specific procedure of adjustment processing according to the second embodiment.
FIG. 12 is a hardware configuration diagram illustrating an example of a computer that realizes a function of the adjustment device according to the embodiment.

### Description of Embodiments

### [Embodiment]

Hereinafter, embodiments of the present invention will be described in detail with reference to the accompanying drawings. Note that in the present description and the drawings, components having substantially the same functional configuration are denoted by the same reference signs, and redundant description is omitted.

One or a plurality of embodiments (including examples, modification examples, and application examples) described below can be performed independently. On the other hand, at least a part of the plurality of embodiments described below may be appropriately combined with at least a part of other embodiments. The plurality of embodiments may include novel features different from each other. Thus, the plurality of embodiments can contribute to solving different objects or problems, and can exhibit different effects.

### [1. Introduction]

For example, it is possible to realize a service in which a terminal device acquires an answer corresponding to an input from a chatbot cooperating with a large language model via an application programming interface (API) and presents the answer on the terminal device.

However, even when instructions having the same contents are input to the chatbot, responses having contents of different purposes may be output. For example, in a case where a user inputs "I want to go to Tokyo Tower", it is conceivable that the chatbot responds with contents corresponding to user's intention of asking for route guidance, such as "The nearest station is A station. Access is possible on foot from the A station". On the other hand, in a case where the user similarly inputs "I want to go to Tokyo Tower." at another timing, contents having a different purpose from the route guidance, such as "Tokyo Tower is a tourist spot representing Japan." may be given as a response.

As described above, so-called response fluctuation (answer fluctuation) in which response contents generated by the chatbot are inconsistent and non-uniform may be generated. Note that it can be said that the response fluctuation is awkwardness of response generation.

Here, a prompt with specific contents may be set to suppress the response fluctuation. However, for example, in a case where a large language model evolves by new learning or is upgraded, even when a prompt having the same contents is set, response fluctuation may be newly generated. Thus, in a case where the response fluctuation, that is, a response having contents different from a purpose increases, a service provider is required to correct the contents of the prompt each time.

The present invention proposes a mechanism capable of improving response accuracy of a chatbot by automatically adjusting degradation in a case where consistency (appropriateness) of response contents of a large language model is degraded.

Note that in a case where there is a limit to improvement of response accuracy in automatic adjustment, intervention by a service provider is required. However, as described above, it is troublesome for the service provider to frequently perform correction work. Thus, the present invention also proposes a mechanism of notifying, at timing at which response accuracy cannot be improved by automatic adjustment and manual improvement is required, the situation.

### [2. System configuration]

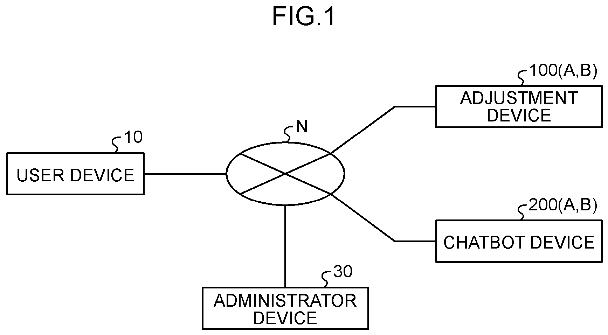

First, a configuration of a system according to an embodiment will be described with reference to FIG. 1. Although a plurality of embodiments will be described in the following, the system illustrated in FIG. 1 is common to all the embodiments. FIG. 1 is a diagram illustrating an example of a system according to the embodiment. In FIG. 1, a system 1 is illustrated as an example of the system according to the embodiment. Information processing according to the proposed technique of the present invention is realized in the system 1.

As illustrated in FIG. 1, the system 1 includes a user device 10, an administrator device 30, an adjustment device 100, and a chatbot device 200. Furthermore, the user device 10, the administrator device 30, the adjustment device 100, and the chatbot device 200 are communicably connected in a wired or wireless manner via a network N. Furthermore, in the system 1, the number of the user devices 10, the administrator devices 30, the adjustment devices 100, and the chatbot devices 200 is not limited.

The user device 10 may be an information processing terminal used by a user U who intends to receive information provision by interaction with a voice assistant. For example, the user device 10 is a smartphone, a wearable device, a tablet terminal, a notebook personal computer (PC), a desktop PC, a mobile phone, a personal digital assistant (PDA), or the like.

As another example, the user device 10 may be realized as a navigation device built in or loaded on a vehicle, that is, an in-vehicle device. The user device 10 as the in-vehicle device may have not only a navigation function but also a recording function (drive recorder function).

The administrator device 30 may be an information processing terminal used by an administrator T who manages maintenance of the entire system 1 or the chatbot device 200. For example, the administrator device 30 is a smartphone, a wearable device, a tablet terminal, a notebook PC, a desktop PC, a mobile phone, a PDA, or the like.

The adjustment device 100 is an example of an information processing device. The adjustment device 100 is an information processing device that performs, as information processing according to the embodiment, adjustment processing of restoring consistency in response contents in a case where response fluctuation is generated in a chatbot, notification processing of notifying that manual improvement is necessary in a case where automatic improvement of response accuracy by the adjustment processing is not possible, and the like. The function of the adjustment device 100 may be realized by an information processing program according to the embodiment.

The chatbot device 200 realizes interaction with the user U as a voice assistant. The chatbot device 200 has a function of generating response information to input information since a language model is mounted. For example, in the chatbot device 200, learning of the language model is repeated or the language model is upgraded in such a manner that interaction with the user U with high accuracy can be realized.

Note that a so-called generative AI (artificial intelligence capable of creating various kinds of content and ideas such as conversation, a story, an image, a moving image, and music) may be mounted on the chatbot device 200. Furthermore, in the following embodiment, the "chatbots" substantially indicate the "chatbot devices 200 (200A and 200B)".

Furthermore, in contrast to the user device 10 and the administrator device 30 being edge computers, the adjustment device 100 and the chatbot device 200 may be realized as cloud computers.

Hereinafter, the embodiment will be described separately as a first embodiment and a second embodiment. However, in a case where it is not necessary to distinguish the first embodiment and the second embodiment, the information processing according to each embodiment is simply referred to as "information processing according to the embodiment".

In addition, the adjustment device 100 according to the first embodiment is referred to as an "adjustment device 100A", and the adjustment device 100 according to the second embodiment is referred to as an "adjustment device 100B". The "adjustment device 100A" and the "adjustment device 100B" are simply referred to as an "adjustment device 100" in a case where distinction thereof is not necessary.

Furthermore, the chatbot device 200 according to the first embodiment will be referred to as a "chatbot device 200A", and the chatbot device 200 according to the second embodiment will be referred to as a "chatbot device 200B". The "chatbot device 200A" and the "chatbot device 200B" are simply referred to as a "chatbot device 200" in a case where distinction thereof is not necessary.

### <First embodiment>

### [1. Functional configuration]

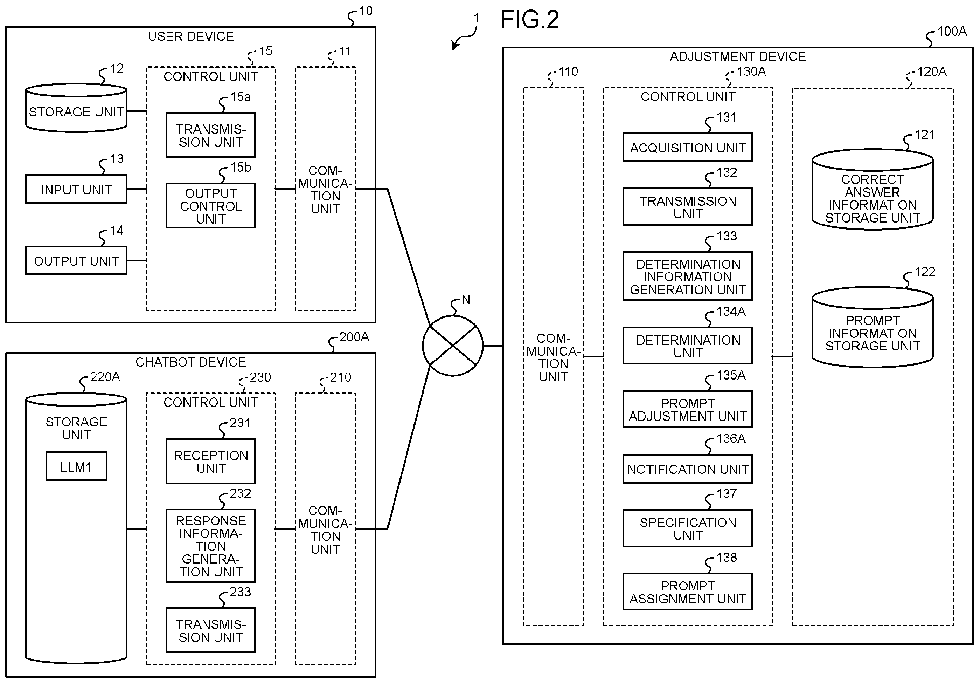

A configuration example of each of the user device 10, the adjustment device 100A, and the chatbot device 200A according to the first embodiment will be described with reference to FIG. 2. FIG. 2 is a diagram illustrating a device configuration example according to the first embodiment. In FIG. 2, the administrator device 30 is omitted.

### [User device 10]

As illustrated in FIG. 2, the user device 10 according to the first embodiment includes a communication unit 11, a storage unit 12, an input unit 13, an output unit 14, and a control unit 15.

### (Communication unit 11)

The communication unit 11 is realized by, for example, a network interface card (NIC) or the like. Then, the communication unit 11 is connected to the network N in a wired or wireless manner, and transmits and receives information to and from the adjustment device 100 and the chatbot device 200, for example.

### (Storage unit 12)

The storage unit 12 is realized by, for example, a semiconductor memory element such as a random access memory (RAM), a read only memory (ROM), or a flash memory, or a storage device such as a hard disk, a solid state drive (SSD), or an optical disk. The storage unit 12 may store, for example, various kinds of data related to the information processing according to the embodiment, and input information.

### (Input unit 13)

The input unit 13 is an input device that receives various inputs from the outside. For example, the input unit 13 is an operation device for the user U to perform various kinds of operation, such as a keyboard, a mouse, and an operation key. Note that in a case where a touch panel is employed in the user device 10, the touch panel is also included in the input unit 13. In this case, the user U performs the various kinds of operation by touching the touch panel. Furthermore, the input unit 13 also includes a microphone that receives voice input by speech.

The user U may input various types of input information such as "I want to go to ∘∘", "I want to buy ∘∘ ", "I want to eat oo", and "I want to listen to ∘∘" via the input unit 13. The input information may be text or voice. The input information may be input to the chatbot device 200 via the adjustment device 100.

### (Output unit 14)

The output unit 14 is a device that performs various outputs of sound, light, vibration, an image, and the like to the outside. The output unit 14 performs the various outputs to the user U under control of the control unit 15. Note that the output unit 14 may be a display device that displays various kinds of information. The display device is, for example, a liquid crystal display or an organic electro luminescence (EL) display. Note that the output unit 14 may be a touch panel-type display device. In this case, the input unit 13 and the output unit 14 may be regarded as an integrated configuration. Furthermore, the output unit 14 may be a speaker.

### (Control unit 15)

The control unit 15 is realized by execution of various programs, which are stored in a storage device inside the user device 10, with a RAM as a work area by a central processing unit (CPU), a micro processing unit (MPU), or the like. Furthermore, the control unit 15 is realized by, for example, an integrated circuit such as an application specific integrated circuit (ASIC) or a field programmable gate array (FPGA).

As illustrated in FIG. 2, the control unit 15 includes a transmission/reception unit 15a and an output control unit 15b, and realizes or executes a function and an action of information processing described below. Note that an internal configuration of the control unit 15 is not limited to the configuration illustrated in FIG. 2, and may be another configuration as long as information processing described later is performed. Furthermore, a connection relationship of processing units included in the control unit 15 is not limited to the connection relationship illustrated in FIG. 2, and may be another connection relationship.

### (Transmission/reception unit 15a)

The transmission/reception unit 15a receives the input information input via the input unit 13. For example, the transmission/reception unit 15a receives a voice input by speech via the microphone or a touch input via the touch panel. Then, the transmission/reception unit 15a transmits the received input information. For example, the transmission/reception unit 15a may transmit the received input information to the adjustment device 100, or may directly transmit the received input information to the chatbot device 200.

Furthermore, the transmission/reception unit 15a receives response information generated by the chatbot device 200 for the input information.

### (Output control unit 15b)

The output control unit 15b performs output control of causing the output unit 14 to output the response information generated by the chatbot device 200.

### [Adjustment device 100A]

As illustrated in FIG. 2, the adjustment device 100A according to the first embodiment includes a communication unit 110, a storage unit 120A, and a control unit 130A.

### (Communication unit 110)

The communication unit 110 is realized by, for example, an NIC or the like. Then, the communication unit 110 is connected to the network N in a wired or wireless manner, and transmits and receives information to and from the user device 10, the administrator device 30, and the chatbot device 200, for example.

### (Storage unit 120A)

The storage unit 120A is realized by, for example, a semiconductor memory element such as a RAM, a ROM, or a flash memory, or a storage device such as a hard disk, an SSD, or an optical disk. The storage unit 120A may store, for example, data and a program with respect to the information processing according to the first embodiment. In addition, according to the example of FIG. 2, the storage unit 120A may include a correct answer information storage unit 121 and a prompt information storage unit 122.

### (Correct answer information storage unit 121)

The correct answer information storage unit 121 stores correct answer response information (correct answer information) prepared for the input information. The correct answer response information may be prepared in advance by the administrator T, for example.

### (Prompt information storage unit 122)

The prompt information storage unit 122 stores various prompts according to the first embodiment. Here, the prompt will be described. The prompt indicates an instruction sentence used for a question or an instruction to the chatbot device 200, and corresponds to at least a part of the input information input to the chatbot device 200.

For example, the input information may include words that are the gist of the instruction and words that assist the instruction. In the following embodiments, words that assist instructions are defined as an "auxiliary prompt". A specific example of this point will be described. For example, it is assumed that the user U is a driver and the user U inputs a speech "I want to go to Tokyo Tower." to the input unit 13. In such a case, the adjustment device 100 performs intention interpretation on the basis of a text "I want to go to Tokyo Tower", and specifies a type of the input information (route guidance in this example) corresponding to an intention interpretation result. Then, according to the adjustment device 100, an auxiliary prompt corresponding to the type of the input information is assigned.

As an example, "Please respond as an assistant of a driver." may be assigned as the auxiliary prompt. Here, the "assistant of a driver" is a role that the adjustment device 100, which has interpreted that the intention of "I want to go to Tokyo Tower." that is a speech input by the user U is route guidance, has determined to request of the chatbot device 200 in a scene of the route guidance. In this example, "The driver wants to go to Tokyo Tower." and "Please respond as an assistant of a driver." are the input information, that is, the prompts, and a part "Please respond as the assistant of a driver." included therein is the auxiliary prompt. On the other hand, a part other than the auxiliary prompt, specifically, "The driver wants to go to Tokyo Tower." may be the prompt, or "The driver wants to go to Tokyo Tower." and "Please respond as an assistant of a driver." as a whole may be the prompt.

Returning to the description of FIG. 1, the prompt information storage unit 122 may store a candidate auxiliary prompt group used by the adjustment device 100 in such a manner. Furthermore, as will be described later, the adjustment device 100 may dynamically generate the input information in order to evaluate the response accuracy of the chatbot device 200. Thus, the prompt information storage unit 122 may also store scenario information for dynamic generation of the input information (prompt).

Here, the information processing according to the first embodiment includes adjustment processing of adjusting the above-described auxiliary prompt according to an evaluation result acquired by evaluation of the response accuracy of the chatbot device 200 and repeating the adjustment of the auxiliary prompt until the evaluation result exceeds an acceptance line.

### (Control unit 130A)

The control unit 130A is realized by execution of various programs stored in a storage device inside the adjustment device 100A (such as the information processing program according to the first embodiment) by a CPU, an MPU, or the like with a RAM as a work area. Furthermore, the control unit 130A is realized by, for example, an integrated circuit such as an ASIC or an FPGA.

As illustrated in FIG. 2, the control unit 130A includes an acquisition unit 131, a transmission unit 132, a determination information generation unit 133, a determination unit 134A, a prompt adjustment unit 135A, a notification unit 136A, a specification unit 137, and a prompt assignment unit 138, and realizes or executes a function and an action of the information processing described below. Note that the internal configuration of the control unit 130A is not limited to the configuration illustrated in FIG. 2, and may be another configuration as long as the information processing described later is performed. Furthermore, a connection relationship of the processing units included in the control unit 130A is not limited to the connection relationship illustrated in FIG. 2, and may be another connection relationship.

### (Acquisition unit 131)

The acquisition unit 131 acquires or receives various kinds of information in the information processing according to the embodiment. For example, the acquisition unit 131 acquires the input information input to the chatbot device 200. For example, the acquisition unit 131 acquires the input information received by the input unit 13 as the input information input to the chatbot device 200. In addition, the acquisition unit 131 may also acquire the input information generated by the determination information generation unit 133.

The acquisition unit 131 acquires the correct answer response information (correct answer information) prepared for the input information.

The acquisition unit 131 acquires the response information generated by the chatbot device 200 for the input information. In addition, the acquisition unit 131 acquires the executed auxiliary prompt on which the adjustment processing of adjusting the auxiliary prompt has been executed. Furthermore, the acquisition unit 131 may also acquire information of the language model.

### (Transmission unit 132)

The transmission unit 132 transmits various kinds of information in the information processing according to the embodiment. For example, the transmission unit 132 transmits the input information including the auxiliary prompt to the chatbot device 200. Furthermore, the transmission unit 132 transmits the response information generated by the chatbot device 200 for the input information to the user device 10.

### (Determination information generation unit 133)

The determination information generation unit 133 generates input information. For example, in processing of determining whether the response information generated by the chatbot device 200 satisfies a predetermined condition (that is, evaluation processing of evaluating the response accuracy of the chatbot device 200), input information of verifying the response accuracy is periodically input to the chatbot device 200. Thus, the determination information generation unit 133 may generate the input information for verification at each preset timing, for example.

For example, the determination information generation unit 133 can generate the input information according to a fixed scenario such as "I want to go to ∘∘", "I want to buy ∘∘", "I want to eat ∘∘", or "I want to listen to ∘∘". For example, in a case where it is desired to evaluate the response accuracy of the chatbot device 200 with respect to the input information of a type of the route guidance, the determination information generation unit 133 generates the input information on the basis of the fixed scenario "I want to go to ∘∘".

### (Determination unit 134A)

The determination unit 134A determines (evaluates) the response accuracy of the chatbot device 200A on the basis of whether the response information generated by the chatbot device 200A according to the input information satisfies a predetermined condition. Specifically, the determination unit 134A determines whether first response information generated by the chatbot device 200A for first input information satisfies the predetermined condition.

In a case where it is determined that the first response information does not satisfy the predetermined condition and the response accuracy of the chatbot device 200A is low, adjustment processing of adjusting the auxiliary prompt included in the first input information is executed. Thus, the determination unit 134A may further determine whether second response information generated by the chatbot device 200A for second input information including the auxiliary prompt on which the adjustment processing has been executed satisfies the predetermined condition.

For example, the determination unit 134A calculates number of characters of the first response information generated by the chatbot device 200A each time the first input information having the same contents is input. Then, the determination unit 134A calculates a statistic of the number of characters between predetermined number of pieces of first response information on the basis of the calculated number of characters, and determines whether the statistic satisfies a predetermined condition.

As another example, each time the first input information having the same contents is input, the determination unit 134A calculates similarity between each piece of the first response information generated by the chatbot device 200A and the correct answer information prepared in advance for the first input information. Then, the determination unit 134A calculates a statistic of the similarity between the predetermined number of pieces of first response information on the basis of the calculated similarity, and determines whether the statistic satisfies a predetermined condition.

Note that the determination unit 134A may calculate a quartile, a mode, a minimum value, and the like as a plurality of kinds of the statistics, and determine whether more than predetermined number of statistics among the plurality of kinds of statistics satisfy the predetermined condition. For example, a condition corresponding to each of the statistics such as the quartile, the mode, and the minimum value may be provided, and the determination unit 134A may evaluate the response accuracy depending on whether a predetermined ratio or more of statistics among the plurality of kinds of statistics satisfy the conditions or whether all the statistics among the plurality of kinds of statistics satisfy the conditions.

### (Prompt adjustment unit 135A)

In a case where it is determined that the first response information does not satisfy the predetermined condition and the response accuracy of the chatbot device 200A is low, the prompt adjustment unit 135A adjusts the auxiliary prompt included in the first input information. Furthermore, in a case where it is determined that the second response information including the auxiliary prompt on which the adjustment processing has been executed does not satisfy the predetermined condition and the response accuracy of the chatbot device 200A is still low, the prompt adjustment unit 135A adjusts the auxiliary prompt included in the second input information again.

In such a manner, the adjustment processing of adjusting the auxiliary prompt is repeated until the condition that the response accuracy of the chatbot device 200A exceeds the acceptance line is satisfied. Furthermore, the auxiliary prompt adjustment corresponds to changing the auxiliary prompt. In view of the above, the adjustment processing of adjusting the auxiliary prompt corresponds to changing the auxiliary prompt of a current adjustment target to another auxiliary prompt.

In addition, processing of changing the auxiliary prompt of the current adjustment target to the other auxiliary prompt is classified into processing of changing the entire auxiliary prompt and processing of changing only a part of words included in the auxiliary prompt.

The processing of changing the entire auxiliary prompt will be specifically described. The prompt adjustment unit 135A selects an arbitrary auxiliary prompt from a change candidate auxiliary prompt group prepared in advance according to a type of the input information to the chatbot device 200A, and executes processing of replacing the auxiliary prompt of the current adjustment target with the selected auxiliary prompt. More specifically, in a case where the predetermined condition is not satisfied, the prompt adjustment unit 135A selects an arbitrary auxiliary prompt from the change candidate auxiliary prompt group until the predetermined condition is satisfied, and repeats replacement processing of replacing the auxiliary prompt of the current adjustment target with the selected auxiliary prompt.

Next, processing of changing only a part of words included in the auxiliary prompt will be specifically described. The prompt adjustment unit 135A changes a predetermined word among words included in the auxiliary prompt of the current adjustment target to another word, and replaces the auxiliary prompt of the current adjustment target with the changed auxiliary prompt in which the predetermined word is changed to the other word. More specifically, in a case where the predetermined condition is not satisfied, the prompt adjustment unit 135A repeats the replacement processing of changing the predetermined word included in the auxiliary prompt of the current adjustment target to another word and replacing the auxiliary prompt of the current adjustment target with the changed auxiliary prompt in which the predetermined word is changed to the other word until the predetermined condition is satisfied.

For example, as the predetermined word included in the auxiliary prompt of the current adjustment target, the prompt adjustment unit 135A changes a word designating a role corresponding to the type of the input information to the chatbot device 200 to a word designating another role of a synonym for the role.

### (Notification unit 136A)

According to the above description, in a case where it is determined that the response information generated by the chatbot device 200A according to the input information does not satisfy the predetermined condition and the response accuracy of the chatbot device 200A is low, the adjustment processing of automatically improving the response accuracy is executed. In addition, although the adjustment processing is repeated until the predetermined condition is satisfied as described above, number of times of the repetition of the adjustment processing is limited. Thus, in a case where the predetermined condition is not satisfied even when the limit is reached and the automatic improvement of the response accuracy becomes impossible, the notification unit 136A notifies a predetermined notification destination that the automatic improvement of the response accuracy is impossible. For example, the notification unit 136A may notify the administrator device 30 of the administrator T of non-improvable information.

For example, in a case where all the auxiliary prompts have been selected from the change candidate auxiliary prompt group without the predetermined condition being satisfied, the notification unit 136A may notify the administrator T that the response accuracy cannot be improved.

In addition, the notification unit 136A may notify the administrator that the response accuracy cannot be improved in a case where all the plurality of prepared other words have been used for the change without the predetermined condition being satisfied.

### (Specification unit 137)

The specification unit 137 specifies the type of the input information on the basis of a result of intention interpretation of the input information. For example, in a case where the input information of the user U is acquired, the specification unit 137 specifies the type of the input information corresponding to the intention interpretation result (route guidance in this case).

### (Prompt assignment unit 138)

The prompt assignment unit 138 assigns an auxiliary prompt corresponding to the type of the input information to the input information. For example, the prompt assignment unit 138 assigns the auxiliary prompt to the input information of the user U.

### [Chatbot device 200A]

As illustrated in FIG. 2, the chatbot device 200A according to the first embodiment includes a communication unit 210, a storage unit 220A, and a control unit 230.

### (Communication unit 210)

The communication unit 210 is realized by, for example, an NIC or the like. Then, the communication unit 210 is connected to the network N in a wired or wireless manner, and transmits and receives information to and from the user device 10, the administrator device 30, and the chatbot device 200, for example.

### (Storage unit 220A)

The storage unit 220A is realized by, for example, a semiconductor memory element such as a RAM, a ROM, or a flash memory, or a storage device such as a hard disk, an SSD, or an optical disk. The storage unit 220A may store, for example, various kinds of data related to the information processing according to the first embodiment, and the input information.

Furthermore, the storage unit 220A may also store a language model. An example in which the storage unit 220A stores only one language model LLM1 is illustrated in FIG. 2. As described above, the language model included in the chatbot device 200A may be fixed to one in the first embodiment.

### (Control unit 230)

The control unit 230 is realized by execution of various programs, which are stored in a storage device inside the chatbot device 200A, by the CPU, the MPU, or the like with the RAM as a work area. Furthermore, the control unit 230 is realized by, for example, an integrated circuit such as an ASIC or an FPGA.

As illustrated in FIG. 2, the control unit 230 includes a reception unit 231, a response information generation unit 232, and a transmission unit 233, and realizes or executes a function and an action of information processing described below. Note that the internal configuration of the control unit 230 is not limited to the configuration illustrated in FIG. 2, and may be another configuration as long as the information processing described later is performed. Furthermore, a connection relationship of the processing units included in the control unit 230 is not limited to the connection relationship illustrated in FIG. 2, and may be another connection relationship.

### (Reception unit 231)

The reception unit 231 receives various kinds of information in the information processing according to the embodiment. For example, the reception unit 231 receives the input information including the auxiliary prompt. In addition, the reception unit 231 may also receive designation of the language model used for generation of the response information.

### (Response information generation unit 232)

In a case where the input information is received, the response information generation unit 232 generates response information with respect to the received input information. The response information is generated by utilization of the designated language model among the language models stored in the storage unit 220A. For example, the response information generation unit 232 applies the language model to the input information, and generates the response information on the basis of an output result by the language model. Thus, it can be said that the response information generation unit 232 is substantially a processing unit that realizes a function as the chatbot.

### (Transmission unit 233)

The transmission unit 233 transmits the response information generated by the response information generation unit 232. In a case where the input information is what is received from the user U, the transmission unit 233 transmits the response information generated for the input information to the user device 10. As a result, interaction is established between the user and the chatbot. On the other hand, in a case where the input information is input information for verification which information is input by the adjustment device 100, the transmission unit 233 transmits response information generated for the input information to the adjustment device 100.

### [2. Overall processing procedure of information processing according to the first embodiment]

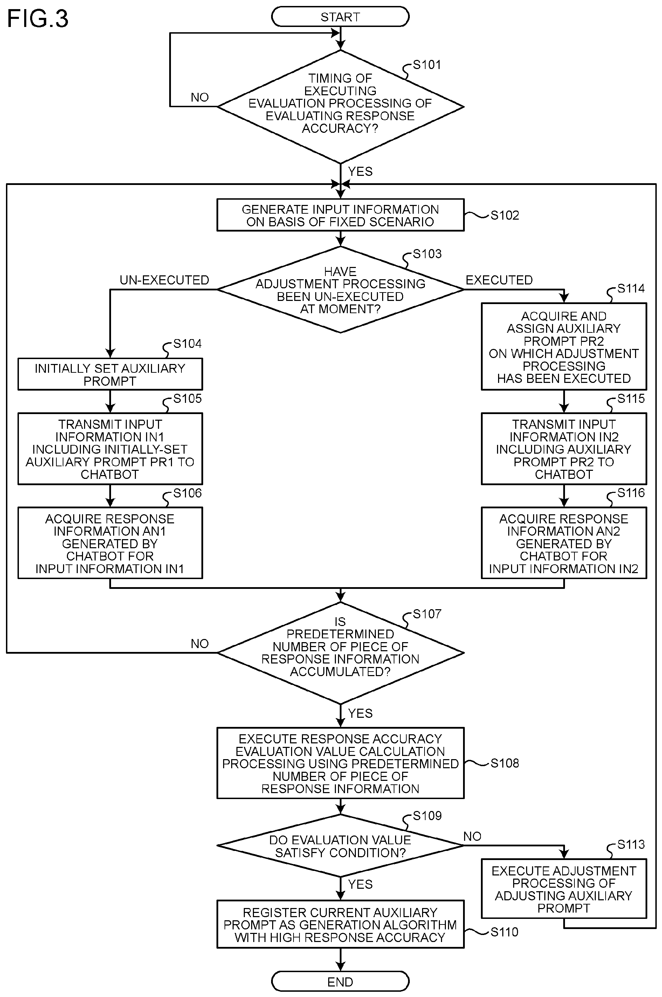

FIG. 3 is a diagram illustrating an overall flow of an information processing procedure according to the first embodiment which procedure is realized by the adjustment device 100A. The information processing according to the first embodiment includes the evaluation processing of evaluating the response accuracy of the chatbot device 200A, and the adjustment processing of adjusting the auxiliary prompt. Then, these kinds of processing are repeated until the response accuracy of the chatbot device 200A satisfies the condition. Thus, first, a flow of a first round of the information processing according to the first embodiment will be described, and then a flow of second and subsequent rounds of the information processing according to the first embodiment will be described.

Furthermore, a scene in which the auxiliary prompt is adjusted in a verification experiment of evaluating the response accuracy of the chatbot device 200A is illustrated in the example of FIG. 3. In such a verification experiment, the input information for verification may be generated at each specific timing (such as every day) by the determination information generation unit 133.

On the other hand, the evaluation of the response accuracy of the chatbot device 200A and the adjustment of the auxiliary prompt may be performed in an actual scene in which the chatbot device 200A is utilized by the user U. In such an example, instead of the input information for verification which information is generated by the determination information generation unit 133, the input information actually input by the user U in the utilization scene may be used for the evaluation processing and the adjustment processing.

Furthermore, although there are various types of the input information supportable by the chatbot device 200A, such as "route guidance", "cooking recipes", and "music content", a scene in which the automatic adjustment of the chatbot device 200A in a field of the "route guidance" is performed is illustrated in FIG. 3.

### (First round of processing)

The determination information generation unit 133 determines whether it is timing to execute the evaluation processing of evaluating the response accuracy of the chatbot device 200A (such as once a day at timing of becoming 16:00, and the like) (Step S101). In a case where it is not the timing of executing the evaluation processing (Step S101; No), the determination information generation unit 133 waits until the timing of executing the evaluation processing is reached.

On the other hand, in a case where the timing of executing the evaluation processing is reached (Step S101; Yes), the determination information generation unit 133 generates the input information for verification on the basis of the fixed scenario (Step S102). In the example of FIG. 3 in which the automatic adjustment of the chatbot device 200A in the field of "route guidance" is performed, it is assumed that the determination information generation unit 133 has generated, for example, the input information of "I want to go to Tokyo Tower." by using the fixed scenario "I want to go to ∘∘". Note that the determination information generation unit 133 may generate the input information having the same contents every time.

Then, the prompt assignment unit 138 determines whether the adjustment processing has been un-executed or not at the moment (Step S103). In a case of the first round of the processing, the prompt assignment unit 138 determines that the adjustment processing has been un-executed at the moment (Step S103; un-executed), and initially sets (initially assigns) the auxiliary prompt to the input information generated in Step S102 (Step S104). For example, the prompt assignment unit 138 may select one arbitrary auxiliary prompt from the change candidate auxiliary prompt group stored in the prompt information storage unit 122. The change candidate auxiliary prompt may be prepared in advance for each type of the input information that can be supported by the chatbot device 200A. Thus, in the example in FIG. 3, the prompt assignment unit 138 may select one arbitrary auxiliary prompt from the change candidate auxiliary prompts corresponding to the "route guidance". For example, it is assumed that the prompt assignment unit 138 selects an auxiliary prompt PR1 of "Please respond as an assistant of a driver." and performs assignment thereof to the input information generated in Step S102.

The transmission unit 132 transmits input information IN1 including the auxiliary prompt PR1 to the chatbot device 200A (Step S105). The chatbot device 200A applies the language model LLM1 to the input information IN1, and generates response information AN1 on the basis of an output result of the language model LLM1.

Note that the input information may have the same contents every time of generation. However, even when the input information having the same contents is input, the chatbot device 200A does not necessarily generate the response information AN1 having the same contents every time. For example, the chatbot device 200A may generate response information corresponding to intention of asking for the route guidance, or may generate the response information AN1 having a purpose different from the route guidance. That is, the contents of the response information may fluctuate.

The acquisition unit 131 acquires the response information AN1 generated by the chatbot device 200A for the input information IN1 (Step S106).

The determination unit 134A determines whether predetermined number of pieces of the response information AN1 generated for the input information IN1 by the chatbot device 200A have been accumulated (for example, 100 pieces have been accumulated) (Step S107). In a case where the determination unit 134A determines that the predetermined number of pieces of response information AN1 have not been accumulated (Step S107; No), the processing returns to Step S102, and is repeated until the predetermined number of pieces of response information AN1 are accumulated.

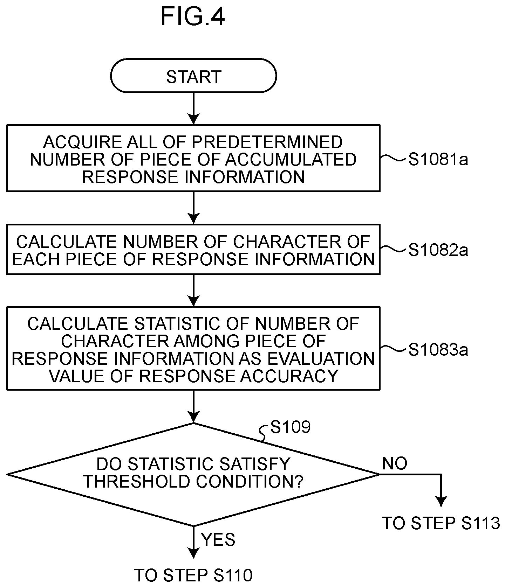

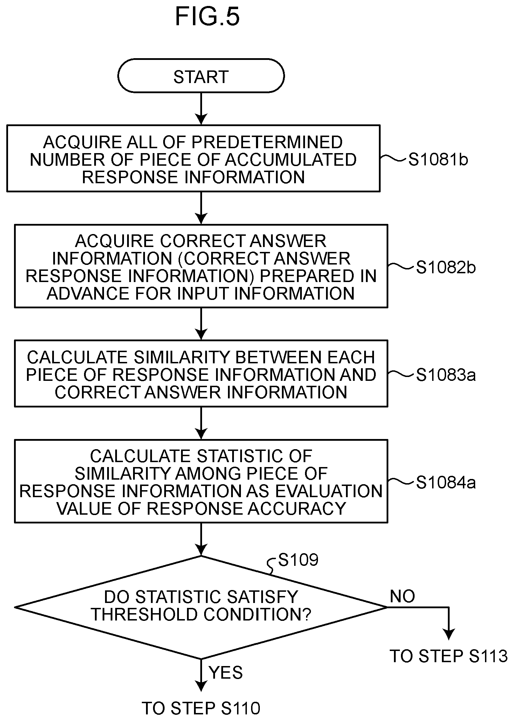

On the other hand, in a case where the determination unit 134A determines that the predetermined number of pieces of response information AN1 have been accumulated (Step S107; Yes), response accuracy evaluation value calculation processing using the predetermined number of pieces of response information AN1 is executed (Step S108). A detailed procedure of the evaluation processing performed in Step S108 will be described with reference to FIG. 4 and FIG. 5. Here, although each of the predetermined number of pieces of accumulated response information AN1 is a response to the input information IN1 having the same contents, there is a case where responses having different contents are included due to response fluctuation of the chatbot device 200A. Thus, the determination unit 134A evaluates the response accuracy of the chatbot device 200A on the basis of whether the evaluation value calculated in Step S108 satisfies a predetermined condition (Step S109).

In a case where the evaluation value of the response accuracy satisfies the predetermined condition (Step S109; Yes), the prompt adjustment unit 135A registers the auxiliary prompt at the moment (such as the auxiliary prompt PR1) as generation algorithm that can realize the chatbot device 200A with the high response accuracy (Step S110). That is, the prompt adjustment unit 135A registers the auxiliary prompt verified to have the high response accuracy as the auxiliary prompt that the prompt assignment unit 138 is to assign to the input information of the user U. Then, the processing ends.

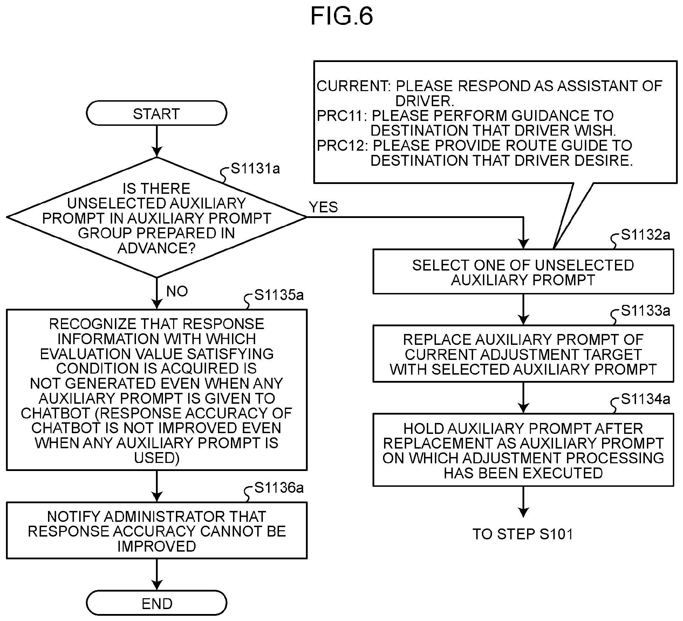

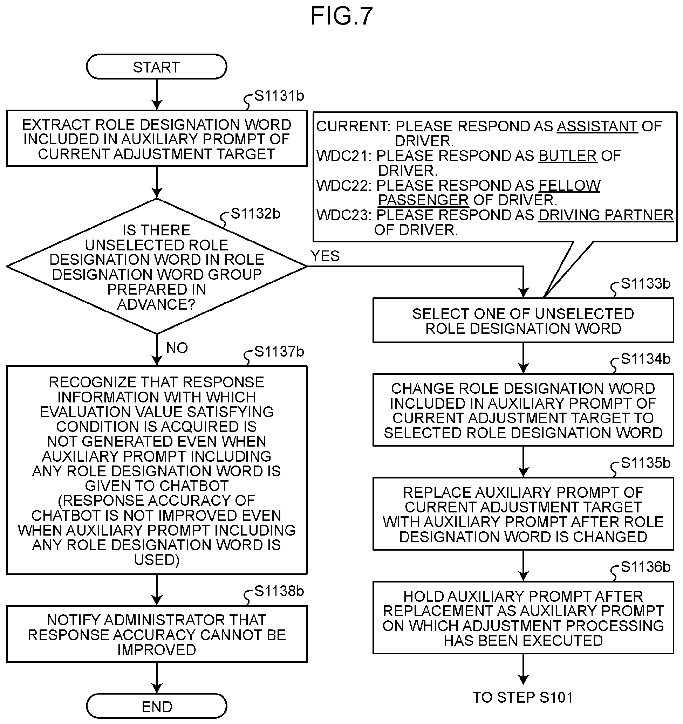

On the other hand, in a case where it is determined that the evaluation value of the response accuracy does not satisfy the predetermined condition (Step S109; No), the prompt adjustment unit 135A executes the adjustment processing of adjusting the auxiliary prompt (Step S113). A detailed procedure of the adjustment processing performed in Step S113 will be described with reference to FIG. 6 and FIG. 7.

After the adjustment processing is performed by the prompt adjustment unit 135A, the processing returns to Step S102, and the processing transitions to a second round of the processing.

### (Second and subsequent rounds of processing)

In the second and subsequent rounds of the processing, the determination information generation unit 133 generates the input information for verification on the basis of the fixed scenario (Step S102). The determination information generation unit 133 may generate the input information "I want to go to Tokyo Tower." which information is the same as that in the first round of the processing also for the second and subsequent rounds of the processing.

Then, the prompt assignment unit 138 determines whether the adjustment processing has been un-executed or not at the moment (Step S103). In a case of the second and subsequent rounds of the processing, the prompt assignment unit 138 determines that the adjustment processing has not been un-executed at the moment, that is, the adjustment processing has been executed (Step S103; executed), acquires an auxiliary prompt PR2 on which the adjustment processing has been executed in Step S113, and assigns the acquired auxiliary prompt PR2 to the input information generated in Step S102 (Step S114).

The transmission unit 132 transmits input information IN2 including the auxiliary prompt PR2 to the chatbot device 200A (Step S115). The chatbot device 200A applies the language model LLM1 to the input information IN2, and generates response information AN2 on the basis of an output result of the language model LLM1.

The acquisition unit 131 acquires the response information AN2 generated by the chatbot device 200A for the input information IN2 (Step S116).

The determination unit 134A determines whether predetermined number of pieces of response information AN2 generated for the input information IN2 by the chatbot device 200A have been accumulated (for example, 100 pieces have been accumulated) (Step S107). In a case where the determination unit 134A determines that the predetermined number of pieces of response information AN2 have not been accumulated (Step S107; No), the processing returns to Step S102, and is repeated until the predetermined number of pieces of response information AN2 are accumulated.

On the other hand, in a case where the determination unit 134A determines that the predetermined number of pieces of response information AN2 have been accumulated (Step S107; Yes), response accuracy evaluation value calculation processing using the predetermined number of pieces of response information AN2 is executed (Step S108). Here, although each of the predetermined number of pieces of accumulated response information AN2 is a response to the input information IN2 having the same contents, there is a case where responses having different contents are included due to response fluctuation of the chatbot device 200A. Thus, the determination unit 134A evaluates the response accuracy of the chatbot device 200A on the basis of whether the evaluation value calculated in Step S108 satisfies the predetermined condition (Step S109).

In a case where the evaluation value of the response accuracy satisfies the predetermined condition (Step S109; Yes), the prompt adjustment unit 135A registers the auxiliary prompt at the moment (such as the auxiliary prompt PR2) as generation algorithm that can realize the chatbot device 200A with the high response accuracy (Step S110). Here, the auxiliary prompt at the moment (such as the auxiliary prompt PR2) is newly registered in place of the auxiliary prompt registered as the generation algorithm that can realize the chatbot device 200A with the high response accuracy in the past processing (such as the auxiliary prompt PR1). That is, the prompt adjustment unit 135A registers the auxiliary prompt verified to have the high response accuracy as an adjusted auxiliary prompt to be assigned to the input information of the user U by the prompt assignment unit 138. Then, the processing ends.

On the other hand, even at the moment in the second and subsequent rounds of the processing, there is a case where the auxiliary prompt with which the evaluation value satisfying the predetermined condition is acquired is not found. In a case where it is determined that the evaluation value of the response accuracy does not satisfy the predetermined condition (Step S109; No), the prompt adjustment unit 135A executes the adjustment processing of adjusting the auxiliary prompt again (Step S113).

After the adjustment processing is performed by the prompt adjustment unit 135A, the processing returns to Step S102 and transitions to a next round.

### [3. Specific procedure of evaluation processing]

Subsequently, a specific procedure of the evaluation processing performed in Step S108 in FIG. 3 will be described. The evaluation processing includes a pattern using the number of characters of the response information generated by the chatbot device 200A and a pattern using similarity between the response information generated by the chatbot device 200A and the correct answer response information. A former processing procedure a will be described in FIG. 4, and a latter processing procedure b will be described in FIG. 5.

FIG. 4 is a diagram illustrating a specific procedure (1) of the evaluation processing according to the embodiment. First, the acquisition unit 131 acquires all the predetermined number of pieces of accumulated (for example, 100 pieces of accumulated) response information (Step S1081a). The acquired response information includes the response information AN1 and the response information AN2 illustrated in FIG. 3.

The determination unit 134A calculates the number of characters in each piece of the response information (Step S1082a). Furthermore, the determination unit 134A calculates a statistic of the number of characters between the pieces of response information as an evaluation value for evaluating the response accuracy of the chatbot device 200A (Step S1083a). For example, as the response information generated by the chatbot device 200A is more redundan, it can be said that unnecessary information deviating from the intention of the user is included. Thus, by focusing on the number of characters, the response accuracy of the chatbot device 200A can be appropriately evaluated.

Note that the determination unit 134A may calculate, for example, at least one of the quartile, the mode, or the minimum value as the statistic.

Then, the determination unit 134A may perform processing of determining whether the statistic of the number of characters calculated in S1083a satisfies a threshold condition as the evaluation processing of Step S109 in FIG. 2 in which processing the response accuracy of the chatbot device 200A is evaluated on the basis of whether the evaluation value satisfies the predetermined condition.

Here, since the statistic of the number of characters satisfying the threshold condition (Step S109; Yes) means that the response accuracy of the chatbot device 200A is high, the processing transitions to Step S110.

On the other hand, since the statistic of the number of characters not satisfying the threshold condition (Step S109; No) means that the response accuracy of the chatbot device 200A is low, the processing transitions to Step S113.

Note that, for example, in a case where the quartile, the mode, and the minimum value are calculated as a plurality of kinds of statistics of the number of characters, the determination unit 134A may individually perform condition determination such as whether the quartile satisfies the threshold condition, whether the mode satisfies the threshold condition, and whether the minimum value satisfies the threshold condition. Then, the determination unit 134A may evaluate the response accuracy on the basis of whether each of a predetermined ratio or more (such as majority) of statistics (such as the quartile and the mode) among the plurality of kinds of statistics of the number of characters satisfies the threshold condition or whether each of all the statistics (quartile, mode, and minimum value) of the plurality of kinds of statistics of the number of characters satisfies the threshold condition.

Next, the processing in FIG. 5 will be described. FIG. 5 is a diagram illustrating a specific procedure (2) of the evaluation processing according to the embodiment. Also in the example of FIG. 5, the acquisition unit 131 acquires all the predetermined number of pieces of accumulated (for example, 100 pieces of accumulated) response information (Step S1081b). The acquired response information includes the response information AN1 and the response information AN2 illustrated in FIG. 3.

In addition, the acquisition unit 131 acquires the correct answer information (correct answer response information) prepared in advance for the input information (Step S1082b).

Then, the determination unit 134A calculates similarity between each piece of the response information and the correct answer information (Step S1083b). Furthermore, the determination unit 134A calculates a statistic of the similarity between pieces of the response information as an evaluation value for evaluating the response accuracy of the chatbot device 200A (Step S1084a). For example, the determination unit 134A may calculate cosine similarity between each piece of the response information and the correct answer information. For example, as the response information generated by the chatbot device 200A is more similar to the correct answer information, it can be said that the response information includes only appropriate information suitable for the intention of the user. Thus, by focusing on the similarity, it is possible to appropriately evaluate the response accuracy of the chatbot device 200A.

Then, the determination unit 134A may perform processing of determining whether the statistic of the similarity which statistic is calculated in Step S1083a satisfies a threshold condition as the evaluation processing of Step S109 in FIG. 2 in which the response accuracy of the chatbot device 200A is evaluated on the basis of whether the evaluation value satisfies the predetermined condition.

Here, the statistic of the similarity satisfying the threshold condition (Step S109; Yes) means that the response accuracy of the chatbot device 200A is high, the processing transitions to Step S110.

On the other hand, the statistic of the similarity not satisfying the threshold condition (Step S109; No) means that the response accuracy of the chatbot device 200A is low, the processing transitions to Step S113.

Note that, for example, in a case where the quartile, the mode, and the minimum value are calculated as a plurality of kinds of statistics of the similarity, the determination unit 134A may individually perform condition determination such as whether the quartile satisfies the threshold condition, whether the mode satisfies the threshold condition, and whether the minimum value satisfies the threshold condition. Then, the determination unit 134A may evaluate the response accuracy on the basis of whether each of a predetermined ratio or more (such as majority) of statistics (such as the quartile and the mode) among the plurality of kinds of statistics of the similarity satisfies the threshold condition or whether each of all the statistics (quartile number, mode, and minimum value) of the plurality of kinds of statistics of the similarity satisfies the threshold condition.

Note that the evaluation processing procedure as a method of evaluating the response accuracy of the chatbot device 200A according to the first embodiment is illustrated in FIG. 3 and FIG. 4. However, response accuracy of the chatbot device 200B according to the second embodiment is also evaluated by a similar method. Thus, in the second embodiment described later, description of a specific procedure of evaluation processing on the chatbot device 200B is omitted.

### [4. Specific procedure of adjustment processing]

Subsequently, a specific procedure of the adjustment processing performed in Step S113 in FIG. 3 will be described. The adjustment processing of adjusting the auxiliary prompt is classified into processing of changing the entire auxiliary prompt and processing of changing only a part of words included in the auxiliary prompt. A former processing procedure a will be described in FIG. 6, and a latter processing procedure b will be described in FIG. 7.

FIG. 6 is a diagram illustrating a specific procedure (1) of the adjustment processing according to the first embodiment. The prompt adjustment unit 135A determines whether there is an unselected auxiliary prompt in the auxiliary prompt group prepared in advance (Step S1131a). For example, the prompt adjustment unit 135A designates a change candidate auxiliary prompt group corresponding to the type "route guidance" among the change candidate auxiliary prompt groups prepared in advance respectively for the types of the input information that can be supported by the chatbot device 200A. Then, the prompt adjustment unit 135A may determine whether there is an unselected auxiliary prompt in the change candidate auxiliary prompt group corresponding to the type "route guidance".

In a case where there are unselected auxiliary prompts in the auxiliary prompt group prepared in advance (Step S1131a; Yes), the prompt adjustment unit 135A selects one of the unselected auxiliary prompts (Step S1132a). For example, it is assumed that the auxiliary prompt PR1 "Please respond as an assistant of a driver." is an adjustment target at the moment, and auxiliary prompts PRC11 and PRC12 in a manner illustrated in FIG. 6 are present as the unselected auxiliary prompts. In this example, the prompt adjustment unit 135A can select any one of the auxiliary prompt PRC11 or PRC12.

Then, the prompt adjustment unit 135A replaces the auxiliary prompt of the current adjustment target with the auxiliary prompt selected in Step S1132a (Step S1133a).

Subsequently, the prompt adjustment unit 135A holds the auxiliary prompt after the replacement as the auxiliary prompt on which the adjustment processing has been executed (Step S1134a). Then, the processing transitions to Step S101. For example, it is assumed that the auxiliary prompt PR1 "Please respond as an assistant of a driver." is replaced with the candidate auxiliary prompt "Please perform guidance to the destination where the driver wishes". In this example, the auxiliary prompt "Please perform guidance to the destination where the driver wishes." is held as the auxiliary prompt PR2 on which the adjustment processing has been executed, and is acquired in Step S114 in FIG. 3.

On the other hand, in a case where there is no unselected auxiliary prompt in the auxiliary prompt group prepared in advance (Step S1131a; No), that is, in a case where the auxiliary prompt prepared in advance is used up, the prompt adjustment unit 135A recognizes that the response information with which the evaluation value satisfying the condition is acquired is not generated even when any auxiliary prompt is given to the chatbot device 200A (response accuracy of the chatbot device 200A is not improved by utilization of any of the auxiliary prompts) (Step S1135a).

Then, the notification unit 136A notifies the administrator T that the response accuracy of the chatbot device 200A cannot be improved (Step 1136a).

Next, the processing in FIG. 7 will be described. FIG. 7 is a diagram illustrating a specific procedure (2) of the adjustment processing according to the embodiment. The prompt adjustment unit 135A extracts a role designation word among the words included in the auxiliary prompt of the current adjustment target (Step 1131b). The role designation word indicates a word that designates a role corresponding to a type of the input information that can be supported by the chatbot device 200A. For example, examples of the role designation word corresponding to the type "route guidance" include an "assistant", a "butler", a "fellow passenger", a "driving partner", and the like. The "assistant", the "butler", the "fellow passenger", and the "driving partner" are in a relationship of synonyms although having different expressions.

The prompt adjustment unit 135A determines whether there is an unselected role designation word in a role designation word group prepared in advance (Step S1132b).

In a case where there are unselected role designation words in the role designation word group prepared in advance (Step S1132b; Yes), the prompt adjustment unit 135A selects one of the unselected role designation words (Step S1133b). For example, it is assumed that the auxiliary prompt PR1 "Please respond as an assistant of a driver." is an adjustment target at the moment, and role designation words WDC21, WDC22, and WDC23 in a manner illustrated in FIG. 7 are present as the unselected role designation words. In this example, the prompt adjustment unit 135A can select any one of the role designation words WDC21 to WDC23.

Note that the role designation words may be prepared in advance by the administrator T and registered in the prompt information storage unit 122, for example. On the other hand, the role designation words may be, for example, those listed by the chatbot device 200. For example, the administrator T may request the chatbot device 200 to present the role designation words by giving a command such as "Please think of a word representing a role assisting the driver".

Returning to the description of FIG. 7, the prompt adjustment unit 135A changes the role designation word included in the auxiliary prompt of the current adjustment target to the role designation word selected in Step S1133b (Step S1134b).

In addition, the prompt adjustment unit 135A replaces the auxiliary prompt of the current adjustment target with the auxiliary prompt after the role designation word is changed (Step S1135b).

Subsequently, the prompt adjustment unit 135A holds the auxiliary prompt after the replacement as the auxiliary prompt on which the adjustment processing has been executed (Step S1136b). Then, the processing transitions to Step S101. For example, it is assumed that the role designation word "assistant" included in the auxiliary prompt PR1 "Please respond as an assistant of a driver." is changed to another role designation word "butler". In this example, "please respond as the butler of the driver." is held as the auxiliary prompt PR2 on which the adjustment processing has been executed, and is acquired in Step S114 in FIG. 3.

On the other hand, in a case where there is no unselected role designation word in the role designation word group prepared in advance (Step S1132b; No), that is, in a case where the role designation word prepared in advance is used up, the prompt adjustment unit 135A recognizes that the response information with which the evaluation value satisfying the condition is acquired is not generated even when the auxiliary prompt including any role designation word is given to the chatbot device 200A (response accuracy of the chatbot device 200A has not been improved by utilization of the auxiliary prompt including any role designation word) (Step S1137b).

Then, the notification unit 136A notifies the administrator T that the response accuracy of the chatbot device 200A cannot be improved (Step S1138b).

### [5. Interaction control processing using the adjusted auxiliary prompt]

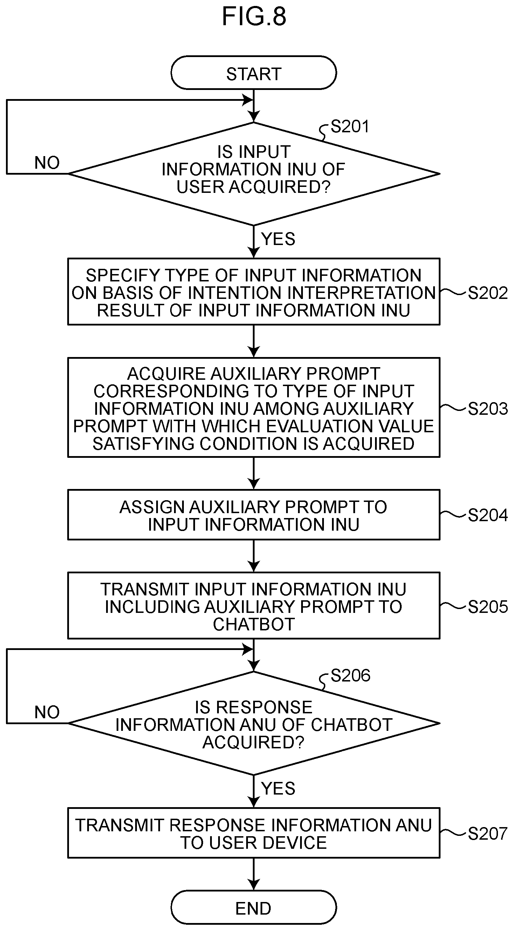

It is assumed that the adjustment device 100A according to the first embodiment has been able to adjust the auxiliary prompt capable of realizing the chatbot device 200A with the high response accuracy by the adjustment processing described above. In such a case, the adjustment device 100A performs control in such a manner that the chatbot device 200A can generate the response information corresponding to the input information of the user U according to the adjusted auxiliary prompt. Such interaction control will be described with reference to FIG. 8. FIG. 8 is a diagram illustrating a procedure of the interaction control executed by the adjustment device 100A according to the first embodiment.

First, the acquisition unit 131 determines whether the input information INU of the user U has been acquired (Step S201).

The specification unit 137 specifies a type of the input information INU on the basis of a result of intention interpretation of the input information INU (Step S202).

The prompt assignment unit 138 acquires the auxiliary prompt corresponding to the type of the input information INU among the auxiliary prompts with which the evaluation value satisfying the condition is acquired (that is, the auxiliary prompts that can realize the chatbot device 200A with the high response accuracy) (Step S203).

Then, the prompt assignment unit 138 assigns the auxiliary prompt acquired in Step S203 to the input information INU (Step S204). For example, it is assumed that the type of the input information INU among the types of the input information supportable by the chatbot device 200A is the "route guidance", and the auxiliary prompt PR2 is registered as the auxiliary prompt that can realize the chatbot device 200A with the high response accuracy. In such an example, the prompt assignment unit 138 acquires the auxiliary prompt PR2 and performs the assignment thereof to the input information INU.

Furthermore, the transmission unit 132 transmits the input information INU including the auxiliary prompt to the chatbot (Step S205).

In such a state, the acquisition unit 131 determines whether the response information ANU generated by the chatbot device 200A can be acquired for the input information INU (Step S206). While the acquisition unit 131 cannot acquire the response information ANU (Step S206; No), the acquisition unit 131 waits until the response information ANU can be acquired.

On the other hand, in a case where the transmission unit 132 has acquired the response information ANU (Step S206; Yes), transmission thereof to the user device 10 is performed (Step S207). Furthermore, although not illustrated in FIG. 8, the output control unit 15b of the user device 10 performs output control of causing the output unit 14 to output the response information ANU.

### <Second embodiment>

Hereinafter, the second embodiment will be described. In the information processing according to the first embodiment, the auxiliary prompt is adjusted according to the evaluation result acquired by evaluation of the response accuracy of the chatbot device 200. On the other hand, information processing according to the second embodiment includes adjustment processing of selecting a chatbot to be executed according to an evaluation result acquired by evaluation of response accuracy of the chatbot device 200B, and repeating the selection of a chatbot to be executed until the evaluation result exceeds an acceptance line.

Note that as will be described later, the selection of the chatbot to be executed in the second embodiment includes, for example, any one of selecting one chatbot device 200 from among chatbot devices or selecting a language model to be executed by one chatbot device 200 from among a plurality of candidates.

### [1. Functional configuration]

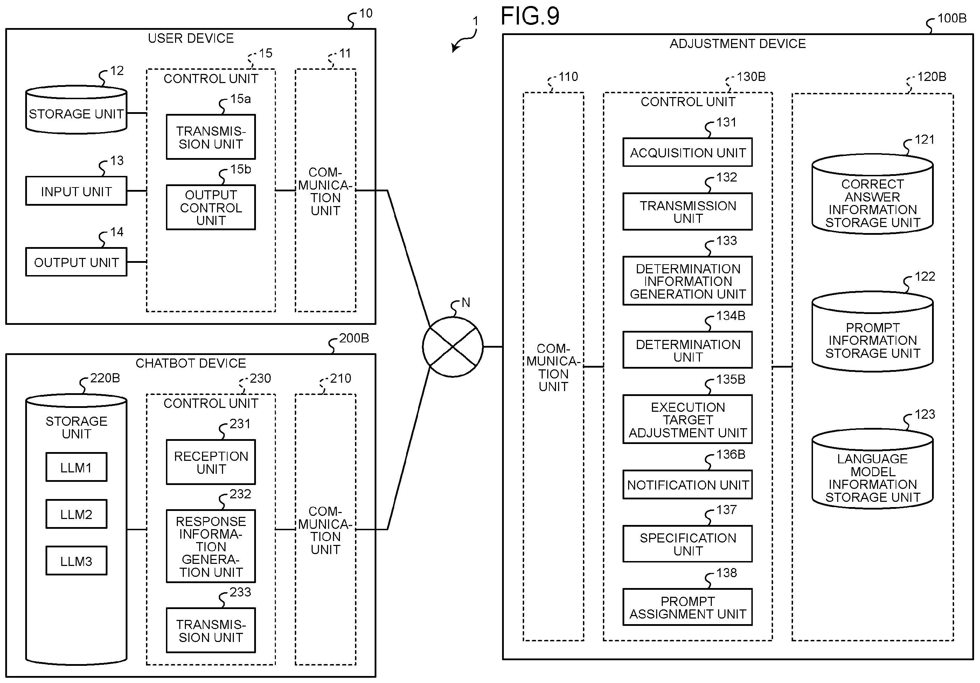

A configuration example of each of an adjustment device 100B and a chatbot device 200B according to the second embodiment will be described with reference to FIG. **9.** FIG. 9 is a diagram illustrating a device configuration example according to the second embodiment. In FIG. 9, description of points common to the first embodiment will be omitted or simplified. For example, since an operation of a user device 10 is the same in both the first embodiment and the second embodiment, the description thereof will be omitted. In addition, description of processing units denoted by reference signs same as those in the first embodiment will be omitted or simplified.

### [Adjustment device 100B]

As illustrated in FIG. 9, the adjustment device 100B according to the second embodiment includes a communication unit 110, a storage unit 120B, and a control unit 130B.

### (Storage unit 120B)

The storage unit 120B is realized by, for example, a semiconductor memory element such as a RAM, a ROM, or a flash memory, or a storage device such as a hard disk, an SSD, or an optical disk. The storage unit 120B may store, for example, data and a program with respect to information processing according to the second embodiment.
Furthermore, according to the example of FIG. 9, the storage unit 120B may further include a language model information storage unit 123 in addition to a correct answer information storage unit 121 and a prompt information storage unit 122.

### (Language model information storage unit 123)

In the information processing according to the second embodiment, an arbitrary language model is selected from a selection candidate language model group, and the selected language model is designated for the chatbot device 200B. As a result, for example, the chatbot device 200B generates response information by using the designated language model among language models registered in a storage unit 220B. Thus, the language model information storage unit 123 may store information of the selection candidate language models, and the stored selection candidate language models and the language models registered in the storage unit 220B have a correspondence relationship as illustrated in FIG. 9. For example, the information of the selection candidate language models may be registered in advance by an administrator T. Note that in a case where accesses to the physically different chatbot devices 200B are required respectively for the language models to be used, the language model information storage unit 123 may store addresses of access destinations which addresses are associated with the language models.

### (Control unit 130B)

The control unit 130B is realized by execution of various programs stored in a storage device inside the adjustment device 100B (such as an information processing program according to the second embodiment) by a CPU, an MPU, or the like with a RAM as a work area. Furthermore, the control unit 130B is realized by, for example, an integrated circuit such as an ASIC or an FPGA.

As illustrated in FIG. 9, the control unit 130B includes an acquisition unit 131, a transmission unit 132, a determination information generation unit 133, a determination unit 134B, an execution target adjustment unit 135B, a notification unit 136B, a specification unit 137, and a prompt assignment unit 138, and realizes or executes a function and an action of information processing described below. Note that the internal configuration of the control unit 130B is not limited to the configuration illustrated in FIG. 9, and may be another configuration as long as the information processing described later is performed. Furthermore, a connection relationship of the processing units included in the control unit 130B is not limited to the connection relationship illustrated in FIG. 9, and may be another connection relationship.

### (Determination unit 134B)

The determination unit 134B determines (evaluates) response accuracy of the chatbot device 200B on the basis of whether response information generated by the chatbot device 200B according to input information satisfies a predetermined condition. Specifically, the determination unit 134B determines whether first response information generated by a first chatbot device 200B for the input information satisfies the predetermined condition.

In a case where the first response information does not satisfy the predetermined condition and it is determined that the response accuracy of the first chatbot device 200B is low, adjustment processing of selecting a second chatbot device 200B having a language model different from that of the first chatbot device 200B as an execution target of executing generation of the response information is executed. Thus, the determination unit 134B determines whether second response information generated for the input information by the second chatbot device 200B satisfies the predetermined condition.

In a case where the second response information does not satisfy the predetermined condition and it is determined that response accuracy of the second chatbot device 200B is low, adjustment processing of selecting a third chatbot device 200B having a language model different from those of the first chatbot device 200B and the second chatbot device 200B as an execution target of executing generation of response information is further executed. Thus, the determination unit 134B further determines whether third response information generated for the input information by the third chatbot device 200B satisfies the predetermined condition.

As described above, in the information processing according to the second embodiment, the selection of the execution target is repeated until a condition that the response accuracy of the chatbot device 200B exceeds an acceptance line is satisfied. Thus, the above example is not a limitation, and there is a possibility that selection is repeated in such a manner that a fourth chatbot device 200B is selected as an execution target of executing generation of response information, and a fifth chatbot device 200B is selected as an execution target of executing generation of response information.

For example, the determination unit 134B calculates number of characters of the first response information generated by the first chatbot device 200B each time the input information having the same contents is input. Then, the determination unit 134B calculates a statistic of the number of characters between the predetermined number of pieces of first response information on the basis of the calculated number of characters, and determines whether the statistic satisfies a predetermined condition.

As another example, every time the input information having the same contents is input, the determination unit 134B calculates similarity between each piece of the first response information generated by the first chatbot device 200B and correct answer information prepared in advance for the input information. Then, the determination unit 134B calculates a statistic of similarity between the predetermined number of pieces of first response information on the basis of the calculated similarity, and determines whether the statistic satisfies a predetermined condition.

Note that the determination unit 134B may calculate a quartile, a mode, a minimum value, and the like as a plurality of kinds of statistics, and determine whether more than predetermined number of statistics among the plurality of kinds of statistics satisfy the predetermined condition. For example, a condition corresponding to each of the statistics such as the quartile, the mode, and the minimum value may be provided, and the determination unit 134B may evaluate the response accuracy depending on whether a predetermined ratio or more of the statistics among the plurality of kinds of statistics satisfy the conditions or whether all the statistics among the plurality of kinds of statistics satisfy the conditions.

Here, although the above example illustrates an example in which the determination unit 134B evaluates the response accuracy of the first chatbot device 200B, the determination unit 134B evaluates response accuracy of the second chatbot device 200B, the third chatbot device 200B, and the like by a similar method.

### (Execution target adjustment unit 135B)

In a case where it is determined that the first response information generated by the first chatbot device 200B for the input information does not satisfy the predetermined condition and the response accuracy of the first chatbot device 200B is low, the execution target adjustment unit 135B selects the second chatbot device 200B having a language model different from that of the first chatbot device 200B as the execution target of executing the generation of the response information. Furthermore, in a case where the second response information generated by the second chatbot device 200B for the input information does not satisfy the predetermined condition and it is determined that the response accuracy of the second chatbot device 200B is low, the execution target adjustment unit 135B selects the third chatbot device 200B having a language model different from those of the first chatbot device 200B and the second chatbot device 200B as the execution target of executing the generation of the response information.

As described above, the adjustment processing of selecting the execution target of executing the generation of the response information from the chatbot devices 200B is repeated until the condition that the response accuracy of the execution target chatbot device 200B exceeds the acceptance line is satisfied. Furthermore, the selection of the execution target corresponds to selecting an arbitrary language model from the selection candidate language model group prepared in advance, and replacing the language model mounted as a function of the chatbot device 200B that is currently the execution target with the selected language model.

The processing of selecting the execution target of executing the generation of the response information will be specifically described. The execution target adjustment unit 135B selects an arbitrary language model from the selection candidate language model group prepared in advance, and replaces a language model mounted as a function of the chatbot that is a current execution target with the selected language model. More specifically, in a case where the predetermined condition is not satisfied, the execution target adjustment unit 135B selects an arbitrary language model from the selection candidate language model group until the predetermined condition is satisfied, and repeats replacement processing of replacing the language model mounted as the function of the chatbot that is the current execution target with the selected language model.

Note that in a case where it is necessary for the execution target adjustment unit 135B to access physically different chatbot devices 200B respectively for the language models selected as the execution targets of executing the generation of the response information, the transmission unit 132 may refer to the address of the access destination for each of the language models stored in the language model information storage unit 123 and transmit input information IN toward the address, and the acquisition unit 131 may acquire the response information generated by the chatbot device 200B for the input information IN.

### (Notification unit 136B)

According to the above description, in a case where the response information generated by the chatbot device 200B according to the input information does not satisfy the predetermined condition and it is determined that the response accuracy of the chatbot device 200B is low, the adjustment processing of automatically improving the response accuracy is executed. In addition, although the adjustment processing is repeated until the predetermined condition is satisfied as described above, number of times of the repetition of the adjustment processing is limited. Thus, in a case where the predetermined condition is not satisfied even when the limit is reached and the automatic improvement of the response accuracy becomes impossible, the notification unit 136B notifies a predetermined notification destination that the automatic improvement of the response accuracy is impossible. For example, the notification unit 136B may notify an administrator device 30 of the administrator T of non-improvable information.

For example, in a case where all the language models have been selected from the selection candidate language model group without the predetermined condition being satisfied, the notification unit 136B may notify the administrator T that the response accuracy cannot be improved.

### [2. Overall processing procedure of information processing according to the second embodiment]

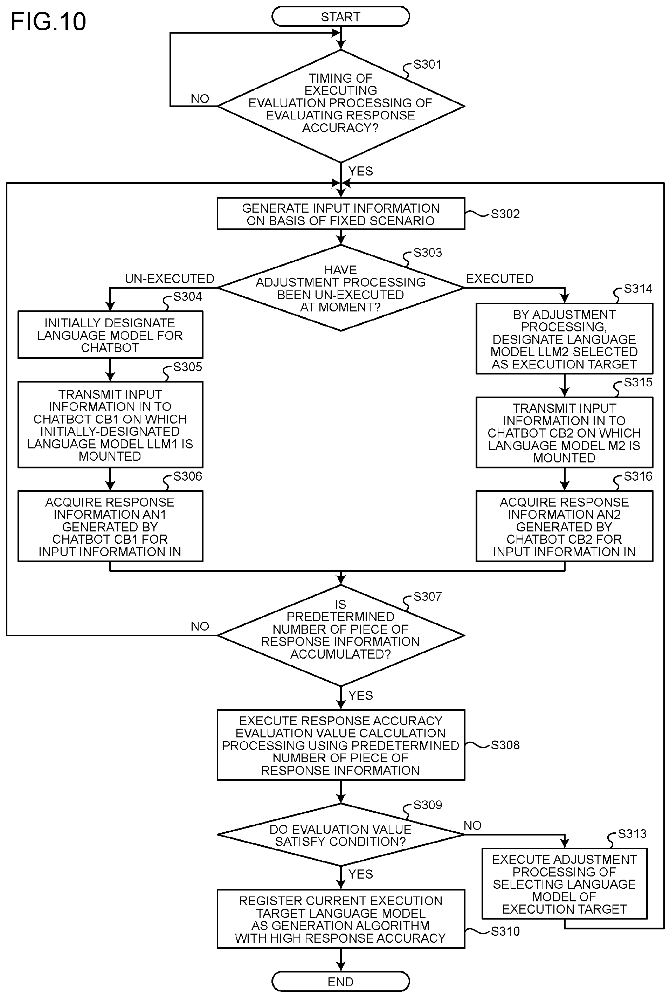

FIG. 10 is a diagram illustrating an overall flow of an information processing procedure according to the second embodiment which procedure is realized by the adjustment device 100B. The information processing according to the second embodiment includes evaluation processing of evaluating the response accuracy of the chatbot device 200B and adjustment processing of selecting the execution target of executing the generation of the response information. Then, these kinds of processing are repeated until the response accuracy of the chatbot device 200B satisfies the condition. Thus, first, a flow of a first round of the information processing according to the second embodiment will be described, and then a flow of second and subsequent rounds of the information processing according to the second embodiment will be described.

Furthermore, the example of FIG. 10 illustrates a scene in which the execution target is selected in a verification experiment of evaluating the response accuracy of the chatbot device 200B. In such a verification experiment, input information for verification may be generated at each specific timing (such as every day) by the determination information generation unit 133.

On the other hand, the evaluation of the response accuracy of the chatbot device 200B and the selection of the execution target may be performed in an actual scene in which the chatbot device 200B is utilized by a user U. In such an example, instead of the input information for verification which information is generated by the determination information generation unit 133, input information actually input by the user U in the utilization scene may be used for the evaluation processing and the adjustment processing.

Furthermore, although there are various types of the input information supportable by the chatbot device 200B, such as "route guidance", "cooking recipes", and "music content", a scene in which the automatic adjustment of the chatbot device 200B in a field of the "route guidance" is performed is illustrated in FIG. 3.

### (First round of processing)

The determination information generation unit 133 determines whether it is timing to execute the evaluation processing of evaluating the response accuracy of the chatbot device 200B (such as once a day at timing of becoming 16:00, and the like) (Step S301). In a case where it is not the timing of executing the evaluation processing (Step S301; No), the determination information generation unit 133 waits until the timing of executing the evaluation processing is reached.

On the other hand, in a case where the timing of executing the evaluation processing is reached (Step S301; Yes), the determination information generation unit 133 generates the input information for verification on the basis of a fixed scenario (Step S302). In the example of FIG. 10 in which the automatic adjustment of the chatbot device 200B in the field of the "route guidance" is performed, it is assumed that the determination information generation unit 133 has generated, for example, the input information IN of "I want to go to Tokyo Tower." by using the fixed scenario "I want to go to ∘∘". Note that the determination information generation unit 133 may generate the input information having the same contents every time.

Then, the execution target adjustment unit 135B determines whether the adjustment processing has been un-executed or not at the moment (Step S303). In a case of the first round of processing, the execution target adjustment unit 135B determines that the adjustment processing has been un-executed at the moment (Step S303; un-executed) and initially designates a language model (Step S304). For example, the execution target adjustment unit 135B may select one arbitrary language model from a change candidate language model group stored in the language model information storage unit 123 and initially designate the selected language model. In the example of FIG. 10, it is assumed that the execution target adjustment unit 135B selects a language model LLM1 and initially designates the language model LLM1.

The transmission unit 132 transmits, to the chatbot device 200B, information of setting the language model LLM1 designated by the execution target adjustment unit 135B as a language model to be used for subsequent interaction. Alternatively, the transmission unit 132 may transmit information of setting the language model LLM1 as a language model for interaction prior to the input information IN for each opportunity of transmitting the input information IN to the chatbot device 200B. Then, the transmission unit 132 transmits the input information IN to a chatbot CB1 (example of the first chatbot device 200B) on which the language model LLM1 is mounted (Step S305). The chatbot CB1 applies the language model LLM1 to the input information IN, and generates response information AN1 on the basis of an output result of the language model LLM1.

Note that an auxiliary prompt may be assigned to the input information IN transmitted to the chatbot CB1. For example, the prompt assignment unit 138 may select one arbitrary auxiliary prompt from a change candidate auxiliary prompt group stored in the prompt information storage unit 122 and perform assignment thereof to the input information IN generated in Step S302.

Furthermore, in the information processing according to the second embodiment, the auxiliary prompt assigned in each round may be fixed. On the other hand, in the information processing according to the second embodiment, by assignment of a different auxiliary prompt in each round, an optimal combination (combination of an auxiliary prompt and a language model) in which the response accuracy of the chatbot device 200 is evaluated to be high may be searched for. That is, in the information processing according to the second embodiment, the information processing according to the first embodiment may also be performed in parallel.

Returning to the description of FIG. 10, the acquisition unit 131 acquires the response information AN1 generated by the chatbot CB1 for the input information IN (Step S306).

The determination unit 134B determines whether predetermined number of pieces of the response information AN1 generated by the chatbot CB1 for the input information IN have been accumulated (for example, 100 pieces have been accumulated) (Step S307). In a case where the determination unit 134B determines that the predetermined number of pieces of response information AN1 have not been accumulated (Step S307; No), the processing returns to Step S302, and is repeated until the predetermined number of pieces of response information AN1 are accumulated.

On the other hand, in a case where the determination unit 134B determines that the predetermined number of pieces of response information AN1 have been accumulated (Step S307; Yes), response accuracy evaluation value calculation processing using the predetermined number of pieces of response information AN1 is executed (Step S308). Since the evaluation processing performed in Step S308 is the same as a pattern of the first embodiment described with reference to FIG. 4 and FIG. 5, description thereof will be omitted. Here, although each of the predetermined number of pieces of accumulated response information AN1 is a response to the input information IN having the same contents, there is a case where responses having different contents are included due to response fluctuation of the chatbot CB1. Thus, the determination unit 134B evaluates the response accuracy of the chatbot CB1 on the basis of whether an evaluation value calculated in Step S308 satisfies a predetermined condition (Step S309).

In a case where the evaluation value of the response accuracy satisfies the predetermined condition (Step S309; Yes), the execution target adjustment unit 135B registers the language model of the current execution target (such as the language model LLM1) as generation algorithm that can realize the chatbot device 200B with the high response accuracy (Step S310). That is, the execution target adjustment unit 135B registers the chatbot having the language model verified to have the high response accuracy as an execution target of executing the generation of the response information. Then, the processing ends.

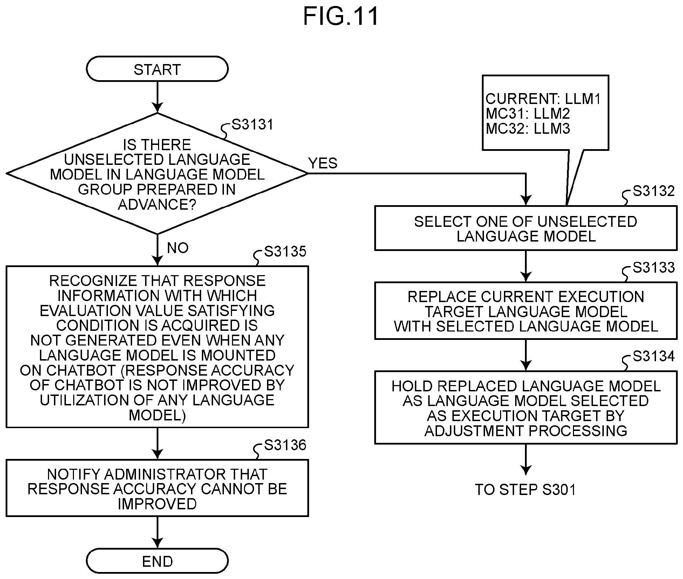

On the other hand, in a case where it is determined that the evaluation value of the response accuracy does not satisfy the predetermined condition (Step S309; No), the execution target adjustment unit 135B executes the adjustment processing of selecting the language model of the execution target (Step S313). A detailed procedure of the adjustment processing performed in Step S313 will be described with reference to FIG. 11.

After the adjustment processing is performed by the execution target adjustment unit 135B, the processing returns to Step S302 and transitions to the second round of the processing.

### (Second and subsequent rounds of processing)

In the second and subsequent rounds of the processing, the determination information generation unit 133 generates input information for verification on the basis of a fixed scenario (Step S302). The determination information generation unit 133 may generate the input information "I want to go to Tokyo Tower." which is the same as that in the first round of the processing also for the second and subsequent rounds of the processing.

Then, the execution target adjustment unit 135B determines whether the adjustment processing has been un-executed or not at the moment (Step S303). In a case of the second and subsequent rounds of the processing, the execution target adjustment unit 135B determines that the adjustment processing has not been un-executed at the moment, that is, the adjustment processing has been executed (Step S303; executed), and the language model selected as the execution target is designated by the adjustment processing in Step S313 (Step S314). Here, it is assumed that the language model LLM2 is selected in the adjustment processing of Step S313.

The transmission unit 132 transmits the input information IN to a chatbot CB2 (example of the second chatbot device 200B) on which a language model LLM2 is mounted (Step S315). As described above, to the input information IN transmitted to the chatbot CB2, an auxiliary prompt having the same contents as those of the first round of the processing may be assigned, or an auxiliary prompt having different contents may be assigned.

The chatbot CB2 applies the language model LLM2 to the input information IN, and generates response information AN2 on the basis of an output result of the language model LLM2.

The acquisition unit 131 acquires the response information AN2 generated by the chatbot CB2 for the input information IN (Step S316).

The determination unit 134B determines whether predetermined number of pieces of response information AN2 generated by the chatbot CB2 for the input information IN have been accumulated (for example, 100 pieces have been accumulated) (Step S307). In a case where the determination unit 134B determines that the predetermined number of pieces of response information AN2 have not been accumulated (Step S307; No), the processing returns to Step S302, and is repeated until the predetermined number of pieces of response information AN2 are accumulated.

On the other hand, in a case where the determination unit 134A determines that the predetermined number of pieces of response information AN2 have been accumulated (Step S307; Yes), response accuracy evaluation value calculation processing using the predetermined number of pieces of response information AN2 is executed (Step S308). Here, although each of the predetermined number of pieces of accumulated response information AN2 is a response to the input information IN having the same contents, there is a case where responses having different contents are included due to response fluctuation of the chatbot CB2. Thus, the determination unit 134B evaluates the response accuracy of the chatbot CB2 on the basis of whether the evaluation value calculated in Step S308 satisfies the predetermined condition (Step S309).

In a case where the evaluation value of the response accuracy satisfies the predetermined condition (Step S309; Yes), the execution target adjustment unit 135B registers the language model of the current execution target (such as the language model LLM2) as generation algorithm that can realize the chatbot device 200B with the high response accuracy (Step S310). Here, the current language model (such as the language model LLM2) is newly registered in place of the language model registered as the generation algorithm capable of realizing the chatbot device 200B with high response accuracy in the past processing (such as the language model LLM1). That is, the execution target adjustment unit 135B registers a chatbot having a language model verified to have high response accuracy as an execution target of executing the generation of the response information. Then, the processing ends.

On the other hand, even at the moment in the second and subsequent rounds of the processing, a language model that can acquire an evaluation value satisfying the predetermined condition may not be found. In a case where it is determined that the evaluation value of the response accuracy does not satisfy the predetermined condition (Step S309; No), the execution target adjustment unit 135B executes the adjustment processing of selecting a language model again (Step S313).

After the adjustment processing is performed by the execution target adjustment unit 135B, the processing returns to Step S302 and transitions to a next round.

### [3. Specific procedure of adjustment processing]

Next, a specific procedure of the adjustment processing (adjustment processing of selecting the language model of the execution target) performed in Step S313 of FIG. 10 will be described.

FIG. 11 is a diagram illustrating the specific procedure of the adjustment processing according to the second embodiment. The execution target adjustment unit 135B determines whether there is an unselected language model in the language model group prepared in advance (Step S3131).

In a case where there are unselected language models in the language model group prepared in advance (Step S3131; Yes), execution target adjustment unit 135B selects one of the unselected language models (Step S3132). For example, it is assumed that the language model LLM1 is a current execution target, and language models MC31 and MC32 in a manner illustrated in FIG. 11 are present as the unselected language models. In such an example, the execution target adjustment unit 135B can select any one of the language model MC31 or MC32.

Then, the execution target adjustment unit 135B replaces the language model of the current execution target with the language model selected in Step S3132 (Step S3133).

Subsequently, the execution target adjustment unit 135B holds the language model after the replacement as the language model selected as the execution target by the adjustment processing (Step S3134). Then, the processing transitions to Step S301. For example, it is assumed that the language model LLM1 is replaced with the language model LLM2 listed as a candidate. In such an example, the language model LLM2 is held as the language model selected as the execution target by the adjustment processing, and is designated in Step S314 of FIG. 10.

On the other hand, in a case where there is no unselected language model in the language model group prepared in advance (Step S3131; No), that is, in a case where the language model prepared in advance is used up, the execution target adjustment unit 135B recognizes that the response information with which the evaluation value satisfying the condition is acquired is not generated even when any language model is mounted on the chatbot device 200B (response accuracy of the chatbot device 200B has not been improved by utilization of any language model) (Step S3135).

Then, the notification unit 136B notifies the administrator T that the response accuracy of the chatbot device 200B cannot be improved (Step S3136).

### <Other embodiments>

The information processing according to each of the above-described embodiments is not limited to application to a PULL-type system called a chatbot, and can be extended to a PUSH-type system such as automatic announcement to a user. For example, a case where the information processing according to each of the embodiments is applied to an automatic announcement system considering a surrounding environment will be described as an example. In such a case, the adjustment device 100 acquires a surrounding traffic congestion situation as a parameter in conjunction with a current location, and inputs the acquired parameter as a prompt to the chatbot device 200. It is conceivable that the chatbot device 200 generates response information of various driving supports associated with the traffic congestion situation.

From the above, by extension of the information processing according to each of the embodiments to the PUSH-type automatic announcement system, it is possible to realize a system that spontaneously performs a user support including attention calling or the like according to the situation without requiring an input of a prompt by the user.

Note that even in a case where the information processing according to each of the embodiments is extended to the PUSH-type automatic announcement system, for example, there is a case where response information is redundan or the response information includes a word irrelevant to a purpose. As described above, even in a case where it can be evaluated that the response accuracy of the chatbot device 200 is decreased in the PUSH-type service, automatic improvement of the response accuracy can be realized.

### <Hardware configuration>

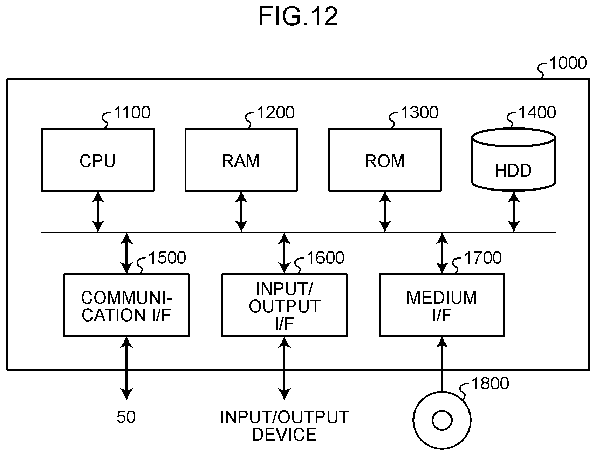

The adjustment device 100 described above may be realized by, for example, a computer 1000 having a configuration in a manner illustrated in FIG. 12. FIG. 12 is a hardware configuration diagram illustrating an example of the computer that realizes the function of the adjustment device 100 according to the embodiment. The computer 1000 includes a CPU 1100, a RAM 1200, a ROM 1300, an HDD 1400, a communication interface (I/F) 1500, an input/output interface (I/F) 1600, and a medium interface (I/F) 1700.

The CPU 1100 operates on the basis of a program stored in the ROM 1300 or the HDD 1400, and controls each unit. The ROM 1300 stores a boot program executed by the CPU 1100 when the computer 1000 is activated, a program depending on hardware of the computer 1000, and the like.

The HDD 1400 stores a program executed by the CPU 1100, data used by the program, and the like. The communication interface 1500 receives data from another device via a predetermined communication network, transmits the data to the CPU 1100, and transmits data generated by the CPU 1100 to another device via the predetermined communication network.

The CPU 1100 controls an output device such as a display and an input device such as a keyboard via the input/output interface 1600. The CPU 1100 acquires data from the input device via the input/output interface 1600. In addition, the CPU 1100 outputs the generated data to the output device via the input/output interface 1600.

The medium interface 1700 reads a program or data stored in a recording medium 1800 and provides the program or data to the CPU 1100 via the RAM 1200. The CPU 1100 loads the program from the recording medium 1800 onto the RAM 1200 via the medium interface 1700, and executes the loaded program. The recording medium 1800 is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the adjustment device 100 according to the embodiment, the CPU 1100 of the computer 1000 realizes the function of the control unit 130 by executing the program loaded on the RAM 1200. Although the CPU 1100 of the computer 1000 reads and executes these programs from the recording medium 1800, these programs may be acquired from another device via a predetermined communication network in another example.

### <Others>

Among the processing described in each of the above embodiments, all or a part of the processing described to be performed automatically can be performed manually, or all or a part of the processing described to be performed manually can be performed automatically by a known method. In addition, the processing procedures, specific names, and information including various kinds of data and parameters illustrated in the document and the drawings can be arbitrarily changed unless otherwise specified. For example, the various kinds of information illustrated in each of the drawings are not limited to the illustrated information.

In addition, each component of each device illustrated in the drawings is functionally conceptual, and is not necessarily configured physically as illustrated in the drawings. That is, a specific form of distribution and integration of the devices is not limited to what is illustrated in the drawings, and all or a part thereof can be functionally or physically distributed and integrated in an arbitrary unit according to various loads, usage conditions, and the like.

In addition, the above-described embodiments can be appropriately combined within a range in which the processing contents do not contradict each other.

Although some of the embodiments of the present application have been described in detail with reference to the drawings, these are merely examples, and the present invention can be implemented in other forms subjected to various modifications and improvements on the basis of knowledge of those skilled in the art in addition to the aspects described in the section of the present invention. Reference Signs List

- 1: SYSTEM
- 10: USER DEVICE
- 30: ADMINISTRATOR DEVICE
- 100A: ADJUSTMENT DEVICE
- 134A: DETERMINATION UNIT
- 135A: PROMPT ADJUSTMENT UNIT
- 136A: NOTIFICATION UNIT
- 100B: ADJUSTMENT DEVICE
- 134B: DETERMINATION UNIT
- 135B: EXECUTION TARGET ADJUSTMENT UNIT
- 136B: NOTIFICATION UNIT
- 200: CHATBOT DEVICE

## Claims

1. An information processing device comprising:
a determination unit that acquires response information generated by a chatbot in accordance with input information, and determines response accuracy of the chatbot on a basis of whether the acquired response information satisfies a predetermined condition;
an adjustment unit that executes, in a case where it is determined that the response information does not satisfy the predetermined condition and the response accuracy of the chatbot is low, predetermined processing of automatically improving the response accuracy; and
a notification unit that notifies a predetermined notification destination that the response accuracy cannot be automatically improved in a case where the response information acquired by the determination unit does not satisfy the predetermined condition after the adjustment unit executes the predetermined processing.

2. The information processing device according to claim 1, wherein
the determination unit determines whether first response information generated by the chatbot for first input information satisfies the predetermined condition, and
in a case where it is determined that the first response information does not satisfy the predetermined condition and the response accuracy of the chatbot is low, the adjustment unit executes processing of adjusting an auxiliary prompt that is at least a part of an instruction sentence included in the first input information.

3. The information processing device according to claim 1, wherein
the determination unit determines whether second response information generated by the chatbot for second input information including an auxiliary prompt after an adjustment by the adjustment unit in at least a part of an instruction sentence satisfies the predetermined condition, and
the adjustment unit executes processing of adjusting the auxiliary prompt after the adjustment again in a case where it is determined that the second response information does not satisfy the predetermined condition and the response accuracy of the chatbot is low.

4. The information processing device according to claim 1, wherein
the determination unit determines whether first response information generated by a first chatbot for the input information satisfies a predetermined condition, and
in a case where it is determined that the first response information does not satisfy the predetermined condition and response accuracy of the first chatbot is low, the adjustment unit executes processing of selecting a second chatbot having a language model different from that of the first chatbot as an execution target of executing generation of response information.

5. The information processing device according to claim 4, wherein
the determination unit determines whether second response information generated for the input information by the second chatbot satisfies the predetermined condition, and
in a case where it is determined that the second response information does not satisfy the predetermined condition and response accuracy of the second chatbot is low, the adjustment unit executes processing of selecting a third chatbot having a language model different from those of the first chatbot and the second chatbot as the execution target.

6. The information processing device according to claim 1, wherein
the determination unit acquires the response information generated by the chatbot each time the input information having the same contents is input, calculates a statistic of number of characters among predetermined number of pieces of the response information on a basis of the number of characters of each piece of the acquired response information, and determines whether the statistic satisfies the predetermined condition.

7. The information processing device according to claim 1, wherein
the determination unit acquires the response information generated by the chatbot each time the input information having the same contents is input, calculates, on a basis of similarity between each piece of the acquired response information and correct answer information prepared in advance for the input information, a statistic of the similarity among predetermined number of pieces of the response information, and determines whether the statistic satisfies the predetermined condition.

8. The information processing device according to claim 6 or 7, wherein
the determination unit calculates a plurality of kinds of the statistics, and determines whether more than predetermined number of the statistics among the plurality of kinds of the statistics satisfy the predetermined condition.

9. An information processing method executed by an information processing device, the information processing method comprising:
a determination step of acquiring response information generated by a chatbot in accordance with input information, and determining response accuracy of the chatbot on a basis of whether the acquired response information satisfies a predetermined condition;
an adjustment step of executing predetermined processing of automatically improving the response accuracy in a case where it is determined that the response information does not satisfy the predetermined condition and the response accuracy of the chatbot is low; and
a notification step of notifying a predetermined notification destination that the response accuracy cannot be automatically improved in a case where the response information acquired in the determination step does not satisfy the predetermined condition after the predetermined processing is executed in the adjustment step.

10. An information processing program executed by an information processing device, the information processing program causing the information processing device to execute:
a determination procedure of acquiring response information generated by a chatbot in accordance with input information and determining response accuracy of the chatbot on a basis of whether the acquired response information satisfies a predetermined condition;
an adjustment procedure of executing predetermined processing of automatically improving the response accuracy in a case where it is determined that the response information does not satisfy the predetermined condition and the response accuracy of the chatbot is low; and
a notification procedure of notifying a predetermined notification destination that the response accuracy cannot be automatically improved in a case where the response information acquired in the determination procedure does not satisfy the predetermined condition after the predetermined processing is executed in the adjustment procedure.
